# EUROPÄISCHE PATENTSCHRIFT

(11) **EP 2 270 478 B1**
(45) Veröffentlichungstag und Bekanntmachung des Hinweises auf die Patenterteilung: **28.03.2012**
(21) Anmeldenummer: 09075286.6
(22) Anmeldetag: 01.07.2009
(51) Int. Cl.: G01N 21/77

(54) **Optischer Sensor und Verfahren zum Detektieren von Molekülen**
Optical sensor and method for detecting molecules
Capteur optique et procédé de détection de molécules

(43) Veröffentlichungstag der Anmeldung: 05.01.2011
(73) Patentinhaber: Fraunhofer-Gesellschaft zur Förderung der angewandten Forschung e.V., 80686 München (DE)
(72) Erfinder: Heidrich, Helmut, 12357 Berlin (DE); Lützow, Peter, 10717 Berlin (DE); Venghaus, Herbert, 10557 Berlin (DE); Hoekstra, Hugo Joseph Wilhelmus Maria, 7552 LA Hengelo (NL)
(74) Vertreter: Pfenning, Meinig & Partner GbR

(56) Entgegenhaltungen:
- WO-A1-2008/141417
- US-A- 5 663 790
- US-A1- 2003 231 826
- US-A1- 2004 023 396
- US-A1- 2004 146 431
- US-A1- 2005 013 529
- US-B2- 7 145 660

## Beschreibung

Die Erfindung betrifft einen optischen Sensor mit einem optischen Wellenleiter und mehreren mit dem wellenleiter optisch gekoppelten Ringresonatoren nach dem Oberbegriff des Hauptanspruchs sowie ein Verfahren zum Detektieren von Molekülen mindestens eines Stoffes mittels eines derartigen Sensors.

In der Druckschrift US 7 145 660 B2 sind derartige optische Sensoren beschrieben, bei denen die Ringresonatoren auch jeweils mit einer Einrichtung zum Verstellen von Resonanzfrequenzen des jeweiligen Ringresonators ausgestattet sein können. Diese bekannten Sensoren eignen sich jeweils zum Untersuchen einer bestimmten Messgröße, bei der es sich z.B. um einen Druck, eine Temperatur oder die An- oder Abwesenheit von Molekülen einer bestimmten chemischen Verbindung handeln kann. Eine mit diesen Sensoren durchgeführte Messung nutzt dabei jeweils einen Einfluss der zu untersuchenden Messgröße auf eine optische Länge eines der Ringresonatoren aus, der zur Folge hat, dass sich Resonanzfrequenzen dieses Ringresonators verschieben, was sich wiederum durch Detektieren von aus dem Wellenleiter ausgekoppeltem Licht erfassen lässt.

Nachteiligerweise erlauben die aus dem genannten Stand der Technik bekannten Sensoren jedoch jeweils nur die Untersuchung einer einzigen Messgröße, indem der als Sensorelement dienende Ringresonator so gestaltet ist, dass seine optischen Eigenschaften von genau dieser Messgröße abhängen, beispielsweise durch eine Beschichtung mit einer bestimmten chemisch aktiven Substanz, die selektiv Molekülen eines bestimmten zu detektierenden Stoffes anzulagern erlauben.

Für viele Anwendungen wäre es jedoch wünschenswert, verschiedene vergleichbare Messgrößen gleichzeitig untersuchen zu können. Insbesondere ist eine empfindliche Detektion einer Anwesenheit oder Abwesenheit von Molekülen verschiedener Verbindungen in vielen Bereichen von großer Bedeutung, beispielsweise in der Medizin, der Biologie, im Umwelt-Monitoring oder allgemein beim Nachweis von Gefahrenstoffen wie Bakterien oder Schadstoffmolekülen in der Luft, in Gewässern oder in anderen Fluiden (d.h. Gasen oder Flüssigkeiten).

Der Erfindung liegt also die Aufgabe zugrunde, einen vergleichbaren Sensor zu entwickeln, mit dem verschiedene Messgrößen, wie beispielsweise eine An- oder Abwesenheit von Molekülen verschiedener Verbindungen oder Gruppen von Verbindungen, mit möglichst geringem Aufwand gleichzeitig untersucht werden können. Der Erfindung liegt ferner die Aufgabe zugrunde, ein entsprechend einfaches Detektionsverfahren vorzuschlagen, das Moleküle verschiedener Stoffe gleichzeitig zu detektieren oder Moleküle einer bestimmten Verbindung mit erhöhter Genauigkeit zu detektieren erlaubt.

Diese Aufgabe wird erfindungsgemäß gelöst durch einen optischen Sensor mit den kennzeichnenden Merkmalen des Hauptanspruchs in Verbindung mit den Merkmalen des Oberbegriffs des Hauptanspruchs sowie durch ein Verfahren mit den Merkmalen des Anspruchs 10. Vorteilhafte Ausgestaltungen und Weiterentwicklungen der Erfindung ergeben sich mit den Merkmalen der Unteransprüche.

Ein erfindungsgemäßer optischer Sensor weist also einen optischen Wellenleiter, in den Licht einspeisbar ist, und ein lichtempfindliches Element zum Detektieren von aus dem Wellenleiter ausgekoppeltem Licht sowie mehrere Ringresonatoren auf, wobei die Ringresonatoren optisch mit dem genannten Wellenleiter gekoppelt sind und mit Ausnahme höchstens eines der Ringresonatoren jeweils eine Einrichtung zum Verstellen von Resonanzfrequenzen des jeweiligen Ringresonators und/oder einer Kopplung zwischen dem Ringresonator und dem Wellenleiter aufweisen, wobei ferner mindestens zwei der Ringresonatoren in einem Grundzustand unterschiedliche optische Längen haben und eingerichtet sind zum Beeinflussen ihrer Resonanzfrequenzen durch verschiedene, für jeden dieser Ringresonatoren jeweils spezifische Messgrößen. Als Messgrößen kommen dabei insbesondere jeweils eine Anwesenheit oder Abwesenheit von Molekülen einer bestimmten Verbindung oder Gruppe von Verbindungen, eine Temperatur oder ein Druck in Frage. In diesen Fällen sei als Grundzustand eines der Ringresonatoren jeweils ein Zustand bezeichnet, in dem die Ringresonatoren mit keinem der genannten Moleküle in Kontakt stehen, keinem äußeren Druck ausgesetzt sind bzw. keine von den jeweils anderen Ringresonatoren abweichende Temperatur haben.

Die erfindungsgemäß erforderliche Kopplung zwischen den Ringresonatoren und dem optischen Wellenleiter kann z.B. durch einen hinreichend geringen Abstand zwischen dem jeweiligen Ringresonator und dem vorzugsweise dazu tangential verlaufendem Wellenleiter, der ein Überlappen evaneszenter Felder von in den Ringresonatoren und in dem Wellenleiter propagierenden Moden möglich macht, realisiert werden. Die Ringresonatoren können bei besonders einfachen Ausführungen der Erfindung durch kreisförmig verlaufende in sich geschlossene Wellenleiter gegeben sein, wobei die unterschiedlichen optischen Längen der Ringresonatoren im Grundzustand dann auf einfache Weise durch unterschiedliche Umfangslängen der Ringresonatoren realisiert sein können.

Durch die vorgeschlagenen Maßnahmen wird es möglich, mehrere Messgrößen gleichzeitig zu untersuchen, weil eine Änderung jeder der Messgrößen jeweils eine Verschiebung von Resonanzen des Ringresonators zur Folge hat, der auf diese Messgröße sensitiv reagiert, wobei diese Verschiebung mit dem lichtempfindlichen Element zum Detektieren des aus dem Wellenleiter ausgekoppelten Lichts festgestellt und der die verschobenen Resonanzen verursachende Ringresonator dabei identifiziert werden kann.

Bei einer bevorzugten Ausführung der Erfindung, die zum Nachweis verschiedener chemischer Stoffe oder zu einem besonders genauen Nachweis eines chemischen Stoffs geeignet ist, weisen die mindestens zwei Ringresonatoren, die weiter oben als zum Beeinflussen ihrer Resonanzfrequenzen durch Messgrößen geeignet bezeichnet worden sind, jeweils einen sensitiven Bereich auf, der mit einer für jeden dieser Ringresonatoren unterschiedlichen aktiven Schicht zum selektiven Anlagern eines oder mehrerer zu detektierender Stoffe versehen ist. Dabei können sich die sensitiven Bereiche unter Umständen jeweils über den gesamten Ringresonator erstrecken. Die aktive Schicht kann dabei z.B. jeweils aus einem molekular geprägten Polymer gebildet sein, um die geforderte selektive Eigenschaft zu haben, und allgemein durch einen Antikörper für den zu detektierenden Stoff gegeben sein. Wenn der mit dieser aktiven Schicht versehene Ringresonator mit Molekülen des entsprechenden Stoffes in Kontakt kommt, hat das ein Anlagern dieser Moleküle zur Folge, womit sich durch deren unmittelbare Nähe zum Ringresonator dessen optische Länge zumindest geringfügig ändert, was wiederum eine Verschiebung der Resonanzfrequenz dieses Ringresonators zur Folge hat. In erster Linie eignet sich der Sensor dann also zum simultanen selektiven Detektieren von Molekülen verschiedener Verbindungen oder Gruppen von Verbindungen. Alternativ oder zusätzlich kann durch die vorgeschlagenen Maßnahmen auch die Selektivität eines Sensors erhöht werden, der die Anwesenheit von Molekülen nur einer bestimmten Verbindung oder Gruppe von Verbindungen detektieren können soll, indem nämlich die aktiven Schichten der verschiedenen Ringresonatoren so gewählt werden, dass sich die verschiedenen Gruppen von an diese aktiven Schichten anlagerbaren Verbindungen so überschneiden, dass eine Schnittmenge nur die zu detektierende Verbindung oder Gruppe von Verbindungen enthält.

Bei dem vorgeschlagenen Verfahren werden dementsprechend Moleküle mindestens eines Stoffes mittels eines Sensors beschriebener Art detektiert, indem Licht in den Wellenleiter des Sensors eingespeist, ein zu untersuchendes Fluid mit mindestens zwei der Ringresonatoren des Sensors in Kontakt gebracht und ein Ausgangssignal des lichtempfindlichen Elements wellenlängenabhängig ausgewertet wird, wobei eine durch das Fluid verursachte Verschiebung von Resonanzen im Ausgangssignal detektiert wird und der Ringresonator, auf den diese Verschiebung zurückzuführen ist, identifiziert wird, indem die Resonanzfrequenzen der Ringresonatoren und/oder deren Kopplung an den Wellenleiter mit unterschiedlichen, für jeweils einen der Ringresonatoren spezifischen Zeitabhängigkeiten variiert (moduliert) werden und ermittelt wird, mit welcher dieser Zeitabhängigkeiten zeitlich korreliert sich die verschobenen Resonanzen verändern. Das Variieren der Resonanzfrequenzen bzw. der Kopplung der Ringresonatoren an den Wellenleiter kann dabei durch eine zeitabhängige Ansteuerung der genannten Einrichtungen zum Verstellen der Resonanzfrequenzen bzw. Kopplungen erfolgen.

Da die Resonanzen genau eines der Ringresonatoren diesem auch ohne Modulation zugeordnet werden können, wenn die übrigen Ringresonatoren durch Variation oder Modulation ihrer Resonanzfrequenzen und/oder ihrer Kopplung an den Wellenleiter identifiziert werden, genügt es dabei, wenn nur alle bis auf einen der Ringresonatoren mit einer Einrichtung zum Modulieren ausgestattet sind und bei dem beschriebenen Verfahren moduliert werden. Unabhängig davon kann eine den Sensor bildende optische Schaltung natürlich unter Umständen noch weitere Ringresonatoren ohne entsprechende Modulationseinrichtung aufweisen, die anderen als den hier beschriebenen Zwecken dienen können.

Die Einrichtungen zum Verstellen der Resonanzfrequenzen der Ringresonatoren bzw. zum Verstellen der Kopplungen zwischen dem jeweiligen Ringresonator und dem wellenleiter können besonders einfach realisiert werden mit Hilfe von Heizelementen, beispielsweise Heizdrähten oder Heizschichten, zum raschen Einstellen und Verstellen von Temperaturen der Ringresonatoren oder mit Hilfe elektrischer Kontakte zum Anlegen eines elektrisches Felds an den jeweiligen Ringresonator. Dann kann eine Abhängigkeit eines effektiven Brechungsindex des jeweiligen Ringresonators von einer Temperatur oder einem äußeren elektrischen Feld zum Einstellen der Resonanzfrequenz ausgenutzt werden. Sofern sich ein solches Heizelement oder derartige elektrische Kontakte in unmittelbarer Nähe einer Koppelstrecke zwischen Ringresonator und Wellenleiter befinden, kann dadurch alternativ oder zusätzlich auch die Kopplung zwischen Ringresonator und Wellenleiter beeinflusst werden.

Die genannten Einrichtungen sind zum Variieren eines effektiven Brechungsindex des jeweiligen Ringresonators eingerichtet. Im Fall eines kreisförmigen Verlaufs des Ringresonators hat dieser dann eine optische Länge von 2nRn, wobei R für einen Radius und n für den effektiven Brechungsindex steht. Die Resonanzfrequenzen sind dann dadurch definiert, dass Nλ der optischen Länge des Ringresonators entsprechen muss, wobei N eine beliebige natürliche Zahl und λ die zur jeweiligen Resonanzfrequenz gehörige Vakuumwellenlänge - also die Resonanzwellenlänge - bezeichnet.

Um eine Auswertung des Sensors in der Art zu erlauben, die zuvor am Beispiel des Verfahrens zum Detektieren von Molekülen beschrieben worden ist, ist der Sensor mit mindestens einer Steuereinheit für die Einrichtungen zum Verstellen der Resonanzfrequenzen ausgestattet, die zum Modulieren der effektiven Brechungsindizes der Ringresonatoren mit unterschiedlichen, für jeden dieser Ringresonatoren jeweils spezifischen Zeitabhängigkeiten eingerichtet ist. Insbesondere kann die Steuereinheit eingerichtet sein, die Brechungsindizes der Ringresonatoren mit unterschiedlichen Modulationsfrequenzen periodisch zu modulieren. Um den Ringresonator zu identifizieren, auf den eine Verschiebung von Resonanzfrequenzen zurückzuführen ist, können die den verschiedenen Ringresonatoren zugeordneten Einrichtungen zum Verstellen der Resonanzfrequenzen bzw. der Kopplungen zwischen Ringresonatoren und Wellenleiter also insbesondere periodisch mit unterschiedlichen Frequenzen angesteuert werden, alternativ aber auch einfach nacheinander.

Besonders vorteilhaft ist es, wenn sich unter den Ringresonatoren des Sensors mindestens ein Referenzresonator (vorzugsweise mehr als ein Referenzring) befindet, der von den Messgrößen unabhängige Resonanzfrequenzen aufweist, der also von einer Änderung der Messgrößen unbeeinflusst bleibt. Die durch den Referenzresonator verursachten Resonanzen im Ausgangssignal können dann als Referenzen verwendet werden, mit Bezug auf die eine Verschiebung der anderen Resonanzen bestimmt wird, so dass sich eine nur mit zusätzlichem Aufwand realisierbare absolute Bestimmung der Resonanzfrequenzen erübrigt. Auf diese Weise wird eine besonders genaue Auswertung des Sensors ohne Bestimmung von Absolutwerten der Resonanzfrequenzen insbesondere dann möglich, wenn der Sensor zwei derartige Referenzresonatoren verschiedener optischer Länge aufweist.

Damit das Ausgangssignal des lichtempfindlichen Elements, anstelle dessen selbstverständlich auch mehrere lichtempfindliche Elemente verwendet werden können, wellenlängenabhängig ausgewertet werden kann, kann der Sensor eine monochromatische Lichtquelle durchstimmbarer Wellenlänge zum Einkoppeln von Licht in den Wellenleiter aufweisen. Dabei kann es sich beispielsweise um einen durchstimmbaren Laser handeln. Vorzugsweise ist diese Lichtquelle über einen Wellenlängenbereich durchstimmbar, der mindestens jeweils eine Resonanzwellenlänge jedes der Ringresonatoren umfasst, damit ein Einfluss von Messgrößen auf jeden der Ringresonatoren festgestellt werden kann. Dann kann das Ausgangssignal wellenlängenabhängig ausgewertet werden, indem das in den Wellenleiter eingespeiste Licht über einen Wellenlängenbereich durchgestimmt wird, der eine Resonanzwellenlänge oder auch mehrere Resonanzwellenlängen jedes der Ringresonatoren umfasst.

Um zu vermeiden, dass sich ein Ringresonator, auf den eine Verschiebung einer Resonanzfrequenz bzw. Resonanzwellenlänge zurückzuführen ist, nicht identifiziert lässt, weil mehrere Resonanzen übereinander liegen, kann vorgesehen sein, dass Licht zweier unterschiedlicher Polarisationen in den vorzugsweise einmodig ausgeführten Wellenleiter eingespeist wird und das Ausgangssignal für jede dieser Polarisationen unabhängig ausgewertet wird. Es ist nämlich unwahrscheinlich, dass ein solches Aufeinanderfallen von Resonanzen, die durch verschiedene Ringresonatoren verursacht sind, bei beiden Polarisationen auftritt.

In einer vorteilhaften Weiterbildung, in der der Sensor eine besonders hohe Empfindlichkeit zeigt, kann ein zweiter Wellenleiter vorgesehen sein, der zusammen mit dem erstgenannten Wellenleiter des Sensors ein Mach-Zehnder-Interferometer bildet. Der erstgenannte Wellenleiter und der zweite Wellenleiter können dann z.B. in Ausbreitungsrichtung vor und hinter den Ringresonatoren jeweils durch einen 3dB-Koppler miteinander gekoppelt sein. Dann lassen sich die Resonanzen bei einem Durchstimmen der Lichtquelle besonders gut detektieren, weil diese Resonanzen nicht nur eine Intensität des aus dem erstgenannten Wellenleiter austretenden Lichts beeinflussen, sondern auch eine Phase einer diesem Licht entsprechenden Welle und weil eine Veränderung dieser Phase mit einem Mach-Zehnder-Interferometer beschriebener Art leicht und genau nachweisbar ist.

Eine besonders genaue Auswertung wird bei einem Sensor zuletzt beschriebener Art möglich, wenn sowohl der erstgenannte Wellenleiter als auch der zweite Wellenleiter optisch mit jeweils einem lichtempfindlichen Element gekoppelt ist und ein Differenzverstärker zum Auswerten von Ausgangssignalen dieser lichtempfindlichen Elemente vorgesehen ist. Die lichtempfindlichen Elemente sind dabei vorzugsweise jeweils an einem Ende des jeweiligen Wellenleiters anzuordnen. In diesem Fall fungieren die lichtempfindlichen Elemente als sogenannte balanced detectors, die durch eine differentielle Analyse ausgewertet werden. Es genügt jedoch auch eine Messung am Ausgang nur eines der Wellenleiter, so dass unter Umständen auch nur ein einziges lichtempfindliches Element am Ausgang eines der Wellenleiter vorgesehen sein kann.

Vorzugsweise ist bei einem Sensor der zuletzt beschriebenen Art der erstgenannte Wellenleiter oder der zweite Wellenleiter mit einem beispielsweise durch einen Heizstreifen realisierbaren Phasenschieber ausgestattet. Die Empfindlichkeit des Sensors kann dann gesteigert werden, indem eine Relativphase zwischen aus beiden Wellenleitern austretenden Lichtanteilen durch eine entsprechende Ansteuerung des Phasenschiebers - vorzugsweise bereits vor einer mit dem Sensor durchzuführenden Messung - so eingestellt wird, dass Änderungen von Resonanzwellenlängen jeweils in einen Bereich einer steilen Flanke gelegt werden, so dass eine geringe Phasenverschiebung eine große Änderung des Ausgangssignals zur Folge hat.

Sensoren der vorgeschlagenen Art können vorteilhaft kompakt und robust ausgeführt werden, indem zumindest der Wellenleiter oder die Wellenleiter und die Ringresonatoren in Planartechnik auf einem gemeinsamen Substrat, z.B. einem Chip, realisiert werden. Wellenleiterkerne sowohl des erstgenannten Wellenleiters als auch der Ringresonatoren und gegebenenfalls des zweiten Wellenleiters können dabei z.B. durch Rippen oder durch eine Dotierung Wellenleiterkerne bildender Bereiche realisiert werden. Heizelemente oder Elektroden, die als Einrichtungen zum Verstellen von Resonanzfrequenzen der Ringresonatoren oder als Phasenschieber dienen können, lassen sich dann z.B. durch ein Auftragen dünner leitender Schichten herstellen.

Insbesondere in Fällen, in denen die Zahl der Messpunkte, d.h. die Anzahl der zu vermessenden Ringresonatoren, deutlich über etwa 10 bis 20 erhöht werden soll, kann es vorteilhaft sein, wenn der Sensor mindestens einen weiteren optisch mit mindestens einem lichtempfindlichen Element gekoppelten Wellenleiter sowie wiederum mehrere optisch mit dem weiteren Wellenleiter gekoppelte und jeweils mit einer Einrichtung zum Verstellen von Resonanzfrequenzen ausgestattete weitere Ringresonatoren aufweist, wobei auch mindestens einige der weiteren Ringresonatoren in einem Grundzustand unterschiedliche optische Längen haben und eingerichtet sind zum Beeinflussen ihrer Resonanzfrequenzen durch verschiedene, für jeden dieser Ringresonatoren jeweils spezifische Messgrößen. Der Sensor kann dann z.B. Matrixform mit weitgehend parallel verlaufenden Wellenleitern haben, in deren Verlauf die Ringresonatoren in unmittelbarer Nähe zum jeweiligen Wellenleiter angeordnet sind. Zum Einspeisen von Licht in die verschiedenen Wellenleiter kann dann z.B. ein Leistungsteiler verwendet werden, der mit den Wellenleitern auf einem gemeinsamen Substrat oder als Faser-Leistungsteiler ausgeführt sein kann.

Ausführungsbeispiele der Erfindung werden nachfolgend anhand der Fign. 1 bis 3 erläutert. Es zeigt
- Fig. 1: eine Aufsicht auf einen optischen Sensor in einer ersten Ausführung der Erfindung,
- Fig. 2: eine Aufsicht auf einen optischen Sensor in einer zweiten Ausführung der Erfindung und
- Fig. 3: eine Aufsicht auf einen optischen Sensor in einer dritten Ausführung der Erfindung.

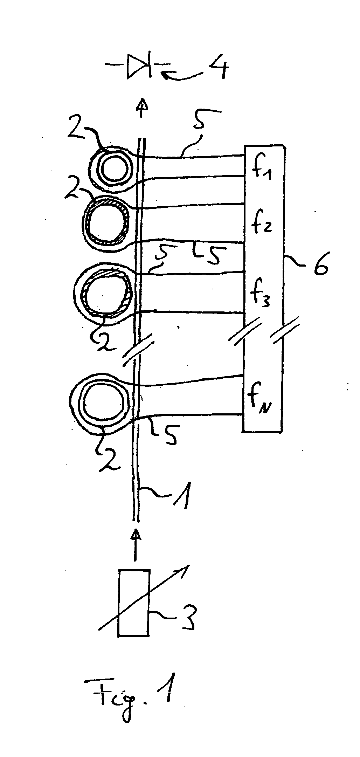

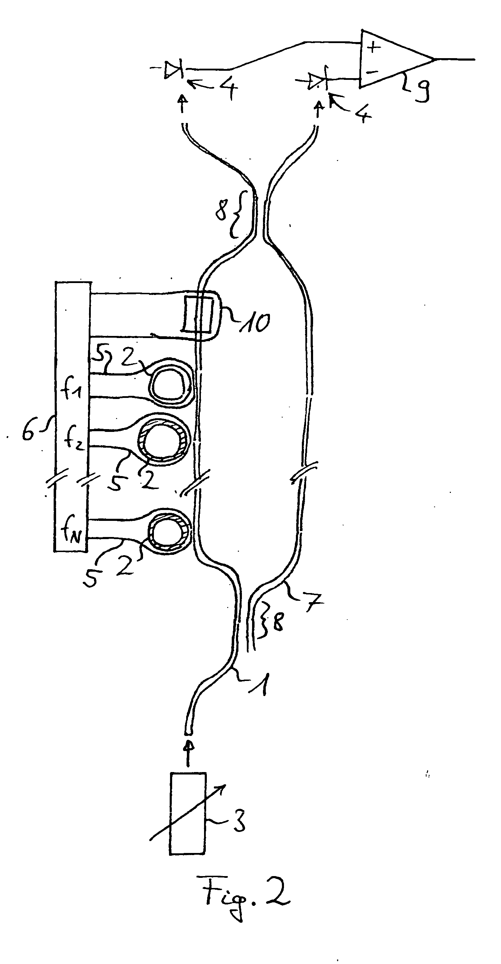

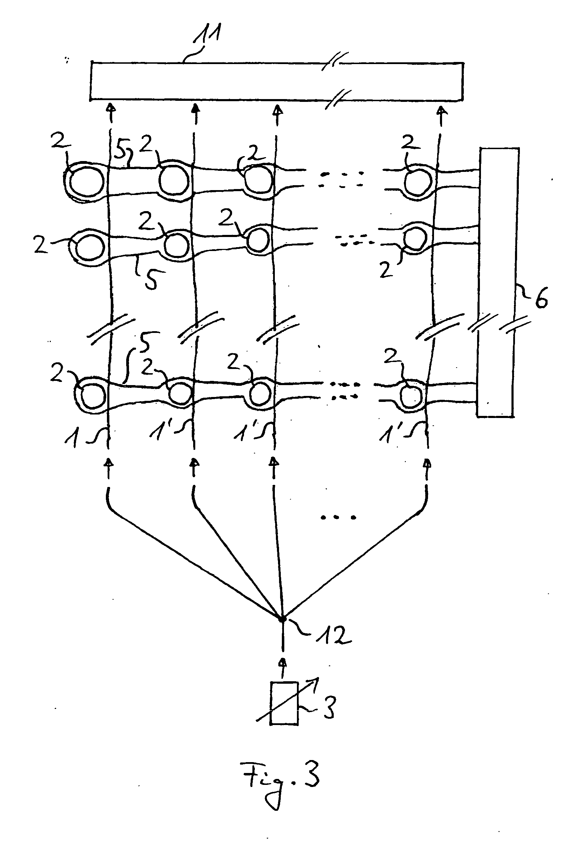

In Fig. 1 ist eine Aufsicht auf einen optischen Sensor dargestellt, bei dem es sich, wie bei den Ausführungsbeispielen aus den Fign. 2 und 3, um eine integrierte optische Schaltung handelt, die in Planartechnik auf einem chipförmigen Substrat realisiert ist. Einige Komponenten dieser integrierten optischen Schaltung sind dabei nur schematisch dargestellt.

Der optische Sensor aus Fig. 1 weist einen gerade verlaufenden ersten Wellenleiter 1 sowie eine Vielzahl von optischen Ringresonatoren 2 auf, die als kreisförmige in sich geschlossene Wellenleiter ausgeführt sind und dadurch optisch mit dem ersten Wellenleiter gekoppelt sind, dass ein Abstand zwischen den Ringresonatoren 2 und dem dazu tangential verlaufenden ersten Wellenleiter 1 so gering gewählt ist, dass sich evaneszente Felder von in den ersten Wellenleiter 1 und in den Ringresonatoren 2 propagierenden Moden überlappen. An einem ersten Ende des ersten Wellenleiters 1 ist eine Lichtquelle 3 zum Einspeisen von Licht in den ersten Wellenleiter 1 angeordnet, bei der es sich um einen durchstimmbaren Laser handelt. An einem zweiten Ende des ersten Wellenleiters 1 ist ein als Fotodetektor zum Detektieren von aus dem ersten Wellenleiter 1 ausgekoppeltem Licht fungierendes lichtempfindliches Element 4 angeordnet. Sowohl der erste Wellenleiter 1 als auch die Wellenleiter, die die Ringresonatoren 2 bilden, weisen jeweils einen Wellenleiterkern auf, der z.B. durch eine auf dem Substrat angeordnete und von diesem durch eine optische Pufferschicht getrennte Rippe oder durch eine den Brechungsindex eines Substratmaterials manipulierende Dotierung des Substrats realisiert sein kann.

Die Ringresonatoren 2 unterscheiden sich voneinander jeweils durch unterschiedliche Radien und Umfangslängen so dass sie auch unterschiedliche optische Längen und daher unterschiedliche Resonanzfrequenzen bzw. Resonanzwellenlängen aufweisen. Außerdem weist jeder der Ringresonatoren 2 eine Einrichtung 5 zum Variieren der Resonanzfrequenzen des jeweiligen Ringresonators 2 auf, die durch eine als Heizelement dienende dünne Schicht ausgeführt ist. Mit einer Steuereinheit 6 können die Heizelemente der Einrichtungen 5 so angesteuert werden, dass die temperaturabhängigen effektiven Brechungsindizes der Ringresonatoren 2 mit unterschiedlichen, für jeden der Ringresonatoren 2 jeweils spezifischen Zeitabhängigkeiten moduliert werden. Insbesondere können die effektiven Brechungsindizes der die Ringresonatoren 2 bildenden Wellenleiter und damit deren optische Längen mit verschiedenen Frequenzen f₁ bis f_{N} periodisch moduliert werden. Dabei bleibt eine Variation der optischen Längen der Ringresonatoren 2 durch diese Modulation jedoch wesentlich kleiner als der Unterschied zwischen den optischen Längen der paarweise verschiedenen Ringresonatoren 2. Ebenfalls zumindest geringfügig variiert wird durch die Ansteuerung der Einrichtungen 5 auch eine Stärke der optischen Kopplung zwischen dem jeweiligen Ringresonator 2 und dem ersten Wellenleiter 1. Bei einer Abwandlung der hier beschriebenen Ausführung können die Einrichtungen 5 anstelle von Heizelementen auch Elektroden zum Anlegen elektrischer Felder an die die Ringresonatoren 2 bildenden Wellenleiter aufweisen, um anstelle einer Temperaturabhängigkeit der Brechungsindizes deren Abhängigkeit von einem äußeren elektrischen Feld auszunutzen.

Mit Ausnahme zweier der Ringresonatoren 2, bei denen es sich z.B. um den in Fig. 1 ganz oben gezeigten kleinsten Ringresonator 2 und den in Fig. 1 ganz unten gezeigten größten Ringresonator 2 handeln kann und die als Referenzresonatoren dienen, sind die Ringresonatoren 2 jeweils mit einer für jeden dieser Ringresonatoren 2 unterschiedlichen aktiven Schicht zum selektiven Anlagern von Molekülen einer bestimmten chemischen Verbindung oder Gruppe von Verbindungen versehen. Diese aktiven Schichten, die in Fig. 1 durch schraffierte Flächen veranschaulicht sind, bedecken vorzugsweise eine Oberseite des jeweiligen Ringresonators und bilden jeweils einen sensitiven Bereich des Ringresonators 2. Wenn dieser sensitive Bereich mit Molekülen der Verbindung oder der Gruppe von Verbindung in Kontakt kommt, denen die aktive Schicht anzulagern erlaubt, sammeln sich diese Moleküle daher in unmittelbarer Nähe des Wellenleiterkerns des jeweiligen Ringresonators 2. Abhängig von ihrer Konzentration verändern sie dadurch den effektiven Brechungsindex und damit die optische Länge dieses Ringresonators 2. Das hat wiederum zur Folge, dass die Resonanzfrequenzen bzw. Resonanzwellenlängen des betroffenen Ringresonators 2 zumindest geringfügig verschoben werden. Die An- oder Abwesenheit oder die Konzentration der genannten Moleküle in einem mit dem Ringresonator 2 in Kontakt gebrachten Fluid definiert so eine Messgröße, durch die die Resonanzfrequenzen und Resonanzwellenlängen des mit der entsprechenden aktiven Schicht versehenen Ringresonators 2 beeinflussbar sind.

Die beiden Ringresonatoren 2, die die Referenzresonatoren bilden, sind dagegen verkapselt ausgeführt, so dass deren Resonanzfrequenzen von den Messgrößen unabhängig sind.

Durch eine entsprechende Auswahl der aktiven Schichten auf den Ringresonatoren 2 kann der optische Sensor für eine simultane Detektion von Molekülen verschiedener Stoffe oder für eine besonders genaue Detektion eines bestimmten Stoffes eingerichtet werden, insbesondere für eine empfindliche Detektion von Gefahrenstoffen wie Bakterien oder Schadstoffmolekülen in der Luft oder in Gewässern. Bei einem vorteilhaft einfachen Verfahren zum Detektieren solcher Moleküle mindestens eines Stoffes wird nun mit der Lichtquelle 3 Licht in den ersten Wellenleiter 1 eingespeist und ein zu untersuchendes Fluid, also z.B. Luft oder Wasser, mit den Ringresonatoren 2 des Sensors in Kontakt gebracht. Dabei wird ein Ausgangssignal des lichtempfindlichen Elements 4 wellenlängenabhängig ausgewertet, indem das in den Wellenleiter 1 eingespeiste Licht über einen Wellenlängenbereich durchgestimmt wird, der so groß ist, dass er mindestens jeweils eine Resonanzwellenlänge jedes der Ringresonatoren 2 umfasst. Eine durch das Fluid verursachte Verschiebung von Resonanzen im Ausgangssignal, die auf ein Anlagern von Molekülen an die aktiven Schichten der Ringresonatoren 2 zurückzuführen ist, die genau diesen Molekülen anzulagern erlauben, wird durch die Auswertung des genannten Ausgangssignals detektiert, in dem die Resonanzen als Intensitätsminima zu erkennen sind. Dabei wird der Ringresonator 2 oder werden die Ringresonatoren 2, auf den oder die diese Verschiebung zurückzuführen ist, identifiziert, indem die Resonanzfrequenzen der Ringresonatoren 2 und in gewissen Grenzen auch deren Kopplung an den Wellenleiter 1 mittels der Einrichtungen 5 mit unterschiedlichen, für jeweils genau einen der Ringresonatoren 2 spezifischen Zeitabhängigkeiten variiert werden und ermittelt wird, mit welcher dieser Zeitabhängigkeiten zeitlich korreliert sich die verschobenen Resonanzen verändern. Dabei können die Einrichtungen 5 der verschiedenen Ringresonatoren 2 z.B. periodisch mit den verschiedenen Frequenzen f₁ bis f_{N} angesteuert werden, was zu einer periodischen Verschiebung der auf einen bestimmten Ringresonator 2 zurückzuführenden Resonanzen mit genau der Frequenz fᵢ führt, mit der dieser Ringresonator 2 bzw. dessen optische Länge moduliert wird. Die durch das Fluid verursachten Resonanzverschiebungen werden dadurch eindeutig jeweils einem einzigen der als Mikroringe ausgeführten Ringresonatoren 2 zugeordnet, indem bei der Messung die optische Länge der Ringresonatoren 2 periodisch so verändert wird, dass sich durch kohärente Detektion eindeutig die zu dem jeweiligen Ringresonator 2 gehörige Änderung der Resonanzwellenlänge ermitteln lässt. Anstelle einer gleichzeitigen Modulation aller Ringresonatoren 2 mit unterschiedlichen Frequenzen f₁ bis f_{N} können die Ringresonatoren 2 auch nacheinander moduliert, die Einrichtungen 5 der Ringresonatoren 2 also nacheinander angesteuert werden.

Führt man eine Messung der beschriebenen Art nicht nur durch, nachdem die Ringresonatoren 2 mit dem Fluid in Kontakt gebracht worden sind und sich die zu detektierenden Moleküle an die verschiedenen Ringresonatoren 2 angelagert haben, sondern auch davor, erkennt man die Anwesenheit der zu detektierenden Moleküle leicht daran, dass sich die zugehörigen Resonanzen, also die Resonanzen, die auf die Ringresonatoren 2 zurückzuführen sind, an die die zu detektierenden Moleküle anlagern konnten, verschoben haben, wobei die Größe der Verschiebung zumindest ein relatives Maß für die Anzahl angelagerter Moleküle, also für eine Konzentration dieser Moleküle in dem untersuchten Fluid, liefert.

Dadurch, dass die zwei Referenzresonatoren nicht mit einer auch als Haftschicht zu bezeichnenden aktiven Schicht für Moleküle versehen sind, so dass sich die zu diesen Referenzresonatoren gehörenden Resonanzen nicht verschieben, können die durch die Referenzresonatoren verursachten Resonanzen, die wie die anderen Resonanzen im Ausgangssignal des die Transmission durch den ersten Wellenleiter 1 messenden lichtempfindlichen Elements 4 erkennbar sind, als Eichmarken dienen. Diese Resonanzen oder Eichmarken gestatten es, Verschiebungen sämtlicher Resonanzen, z.B. durch Veränderungen einer Umgebungstemperatur, zu identifizieren. Daher ist es insbesondere nicht erforderlich, die jeweils verwendeten Wellenlängen des Lichts genau zu kennen. Es ist lediglich sicherzustellen, dass der gesamte Wellenlängenbereich, über den die Lichtquelle 3 durchgestimmt wird, mit gleichmäßiger Geschwindigkeit durchfahren wird, so dass über die Strukturen der Referenzresonatoren, also über die auf die Referenzresonatoren zurückzuführenden Resonanzen, und die Zeit relative Verschiebungen aller anderen Resonanzen eindeutig bestimmt werden können.

Der effektive Brechungsindex der Ringresonatoren 2, von dem deren optische Längen abhängen, zeigt eine ausgeprägte Abhängigkeit von der Polarisation des Lichts, das in den polarisationserhaltenden einmodigen Wellenleiter 1 und von diesem in die ebenfalls einmodig ausgeführten Ringresonatoren 2 eingekoppelt wird. Dabei kann man zwischen TE- und TM-Moden unterscheiden. Wird die beschriebene Analyse sowohl mit TE- als auch mit TM-polarisiertem Licht durchgeführt, erhält man in vorteilhafter Weise zwei voneinander unabhängige Sätze von Messdaten, die zu einer Reduktion verbleibender Messunsicherheiten genutzt werden können. Das gilt insbesondere dann, wenn für eine der Polarisationen die zu messenden Strukturen bzw. Resonanzen zufällig in einem Spektralbereich liegen, in dem sich viele Strukturen überlagern, was eine Trennung der zu den verschiedenen Ringresonatoren gehörenden Messsignale erschweren kann.

Das beschriebene Verfahren, das vom Prinzip her einfach ist und das Potential hat, auch in Handgeräten umgesetzt zu werden, benötigt insbesondere keine Temperaturstabilisierung des als Messchip ausgeführten optischen Sensors und ermöglicht in beschriebener Weise eine label-freie in-situ Messung. Dabei ist eine gleichzeitige Messung an den unter Umständen in großer Zahl vorgesehenen Ringresonatoren 2 möglich. Das ist z.B. von Bedeutung, wenn das Vorhandensein eines bestimmten Moleküls mit hoher Zuverlässigkeit ermittelt werden muss. Dann kann man eine hinreichend große Zahl von Mikroringen, die die Ringresonatoren 2 bilden, mit dem entsprechenden Antikörper beschichten, der dann die jeweilige aktive Schicht bildet, und eine ebenfalls hinreichend große Zahl von Mikroringen unbeschichtet oder nicht selektiv beschichtet ausführen und als Referenzresonatoren zum Vergleich mit den als Sensorelementen dienenden Ringresonatoren 2 heranziehen. Dabei benötigt das Verfahren keine spektral aufgelöste Detektion, z.B. über einen Spektrometer, und auch keine Strahlungsquelle mit exakt bekannter Emissionswellenlänge als Lichtquelle 3.

Ein anderes Ausführungsbeispiel für einen optischen Sensor entsprechender Funktionsweise ist in Fig. 2 dargestellt. Wiederkehrende Merkmale sind dabei wieder mit den gleichen Bezugszeichen versehen und werden, wie auch bei dem folgenden Ausführungsbeispiel aus Fig. 3, nicht mehr eingehend erläutert.

Zusätzlich weist der in Fig. 2 gezeigte Sensor einen zweiten Wellenleiter 7 auf, der zusammen mit dem ersten Wellenleiter 1 ein Mach-Zehnder-Interferometer bildet. In Ausbreitungsrichtung des aus der Lichtquelle 3 in den ersten Wellenleiter 1 eingekoppelten Lichts sind die beiden im Wesentlichen parallel zueinander verlaufenden Wellenleiter 1 und 7 vor und hinter den Ringresonatoren 2 jeweils durch einen Richtkoppler 8 miteinander gekoppelt, der als 3dB-Koppler ausgeführt ist. Ein Ausgang sowohl des ersten Wellenleiters 1 als auch des zweiten Wellenleiters 7 ist optisch jeweils mit einem lichtempfindlichen Element 4 gekoppelt, wobei ein Differenzverstärker 9 zum Auswerten von Ausgangssignalen dieser lichtempfindlichen Elemente 4 vorgesehen ist. Ein Ausgangssignal des Differenzverstärkers 9 hängt dadurch sehr sensitiv von einer relativen Phasenlage zwischen einem im ersten Wellenleiter 1 und einem im zweiten Wellenleiter 7 propagierenden Wellenanteil im Bereich des zweiten Richtkopplers 8 hinter den Ringresonatoren 2 ab. Da eine Resonanz eines beliebigen der Ringresonatoren 2 nicht nur eine Intensität des durch den ersten Wellenleiter 1 propagierenden Lichtanteils beeinflusst, sondern auch dessen Phasenlage, können die Resonanzen durch Auswertung des Ausgangssignals des Differenzverstärkers 9 in gleicher Weise detektiert werden wie bei dem zuvor beschriebenen Ausführungsbeispiel durch Auswertung des Ausgangssignals des dort nur einen lichtempfindlichen Elements 4. Auch bei der in Fig. 2 gezeigten Anordnung könnte jedoch eines der beiden lichtempfindlichen Elemente 4 weggelassen werden und eine Messung am Ausgang nur eines der beiden Wellenleiter 1 und 7 vorgenommen werden.

Im Verlauf des ersten Wellenleiters 1 ist bei dem Sensor aus Fig. 2 ein Phasenschieber 10 angeordnet, der in ähnlicher Weise ausgeführt sein kann wie die Einrichtungen 5 der Ringresonatoren 2 und mit dem die Phasenlage des durch den ersten Wellenleiter 1 propagierenden Lichtanteils eingestellt werden kann. Im vorliegenden Ausführungsbeispiel ist dieser Phasenschieber 10 durch einen Heizstreifen realisiert, der einen effektiven Brechungsindex des ersten Wellenleiters im Bereich des Phasenschiebers 10 zu manipulieren erlaubt. Der Phasenschieber 10 könnte in gleicher Weise auch am zweiten Wellenleiter 7 angebracht sein. Bei dem mit dem Sensor aus Fig. 2 durchgeführten Detektionsverfahren, das ansonsten dem zuvor beschriebenen Verfahren entspricht, wird nun eine Relativphasenlage zwischen den aus den beiden Wellenleitern 1 und 7 austretenden Lichtanteilen zur Empfindlichkeitssteigerung vor der Messung so eingestellt, dass Änderungen von Resonanzwellenlängen jeweils in einen Bereich einer steilen Flanke des Ausgangssignals des Differenzverstärkers 9 gelegt werden. Durch das mit dem Heizstreifen beaufschlagte Teilstück des im vorliegenden Beispiel ersten Wellenleiters 1 wird die Phasenbeziehung am Ausgang des Mach-Zehnder-Interferometers dadurch so eingestellt, dass eine Sensitivität des Sensors maximiert wird.

Wenn die Zahl der Messpunkte, d.h. die Anzahl der zu vermessenden Ringresonatoren 2, deutlich erhöht werden soll, empfiehlt sich eine parallele Anordnung mehrerer Wellenleiter mit in beschriebener Weise ausgeführten und jeweils an diese Wellenleiter gekoppelten Ringresonatoren 2. Ein entsprechend ausgeführter optischer Sensor ist in Fig. 3 gezeigt, wobei auch dort wiederkehrende Merkmale wieder mit den gleichen Bezugszeichen versehen sind. Zusätzlich zu dem ersten Wellenleiter 1 weist dieser Sensor mehrere weitere Wellenleiter 1' auf, die parallel zu dem ersten Wellenleiter 1 verlaufen, wobei auch jeder der weiteren Wellenleiter 1' jeweils optisch mit mehreren Ringresonatoren 2 gekoppelt sind, die wiederum ebenfalls jeweils eine Einrichtung 5 zum Verstellen von Resonanzfrequenzen des jeweiligen Ringresonators 2 aufweisen. Auch die mit den weiteren Wellenleitern 1' gekoppelten Ringresonatoren 2 haben jeweils bereits in einem Grundzustand unterschiedliche optischen Längen, die durch verschiedene Radien der Ringresonatoren 2 verursacht sind, und sind in ähnlicher Weise wie die Ringresonatoren 2 der zuvor beschriebenen Ausführungsbeispiele zum Beeinflussen ihrer Resonanzfrequenzen durch verschiedene, für jeden dieser Ringresonatoren 2 jeweils spezifische Messgrößen eingerichtet. Eine Detektion von aus den Wellenleitern 1 und 1' austretenden optischen Ausgangssignalen erfolgt in diesem Fall mit Hilfe eines Detektor-Arrays 11, das für jeden der Wellenleiter 1 und 1' jeweils ein lichtempfindliches Element umfasst. Zum Einspeisen von Licht in die Wellenleiter 1 und 1' weist der Sensor aus Fig. 3 einen passiven Leistungsteiler 12 auf, der auf demselben Chip oder Substrat angeordnet sein kann wie die Wellenleiter 1 und 1' und die Ringresonatoren 2 oder vor dem Chip durch einen Faser-Leistungsteiler realisiert sein kann. Im letztgenannten Fall kann ein den Leistungsteiler 12 bildendes Faserbündel bei einer einzigen Justage zur Einspeisung von Licht in diese Wellenleiter 1 und 1' an Eingängen der Wellenleiter 1 und 1' angeordnet werden.

In einer weiteren Abwandlung kann schließlich auch für jeden der Wellenleiter 1 und 1' jeweils wieder ein dem zweiten Wellenleiter 7 aus Fig. 2 entsprechender Referenzwellenleiter vorgesehen werden, so dass der Sensor mehrere parallel zueinander angeordnete Mach-Zehnder-Interferometer mit gekoppelten Ringresonatoren 2 aufweist.

## Patentansprüche

1. Optischer Sensor, der einen optischen Wellenleiter (1), in den Licht einspeisbar ist, und mindestens ein lichtempfindliches Element (4) zum Detektieren von aus dem Wellenleiter (1) ausgekoppeltem Licht sowie mehrere Ringresonatoren (2) aufweist, wobei die Ringresonatoren (2) optisch mit dem genannten Wellenleiter (1) gekoppelt sind und mit Ausnahme höchstens eines der Ringresonatoren (2) jeweils eine Einrichtung (5) zum Verstellen von Resonanzfrequenzen des jeweiligen Ringresonators (2) und/oder einer Kopplung zwischen dem Ringresonator (2) und dem Wellenleiter (1) aufweisen, wobei diese Einrichtungen (5) eingerichtet sind zum Variieren eines effektiven Brechungsindex des jeweiligen Ringresonators (2),
**dadurch gekennzeichnet,**
**dass** mindestens zwei der Ringresonatoren (2) in einem Grundzustand unterschiedliche optische Längen haben und eingerichtet sind zum Beeinflussen ihrer Resonanzfrequenzen durch verschiedene, für jeden dieser Ringresonatoren (2) jeweils spezifische Messgrößen, wobei der Sensor mindestens eine Steuereinheit (6) für die Einrichtungen (5) zum Verstellen der Resonanzfrequenzen der Ringresonatoren (2) aufweist, die zum Modulieren der effektiven Brechungsindizes der Ringresonatoren (2) mit unterschiedlichen, für jeden dieser Ringresonatoren (2) jeweils spezifischen Zeitabhängigkeiten eingerichtet ist.

2. Sensor nach Anspruch 1, **dadurch gekennzeichnet, dass** die mindestens zwei Ringresonatoren (2) jeweils einen sensitiven Bereich aufweisen, der mit einer für jeden dieser Ringresonatoren (2) unterschiedlichen aktiven Schicht zum selektiven Anlagern eines oder mehrerer zu detektierender Stoffe versehen ist.

3. Sensor nach einem der Ansprüche 1 oder 2, **dadurch gekennzeichnet, dass** sich unter den Ringresonatoren (2) mindestens ein Referenzresonator mit von den Messgrößen unabhängigen Resonanzfrequenzen befindet.

4. Sensor nach einem der Ansprüche 1 bis 3, **dadurch gekennzeichnet, dass** er eine Lichtquelle (3) durchstimmbarer Wellenlänge zum Einkoppeln von Licht in den Wellenleiter (1) aufweist.

5. Sensor nach einem der Ansprüche 1 bis 4, **dadurch gekennzeichnet, dass** die Einrichtungen (5) zum Verstellen der Resonanzfrequenzen der Ringresonatoren (5) jeweils ein Heizelement oder elektrische Kontakte zum Anlegen eines elektrischen Felds an den jeweiligen Ringresonator (2) aufweisen.

6. Sensor nach einem der Ansprüche 1 bis 5, **dadurch gekennzeichnet, dass** er mindestens einen zweiten Wellenleiter (7) aufweist, der zusammen mit dem erstgenannten Wellenleiter (1) ein Mach-Zehnder-Interferometer bildet.

7. Sensor nach Anspruch 6, **dadurch gekennzeichnet, dass** sowohl der erstgenannte Wellenleiter (1) als auch der zweite Wellenleiter (7) optisch mit jeweils einem lichtempfindlichen Element (4) gekoppelt sind und ein Differenzverstärker (9) zum Auswerten von Ausgangssignalen dieser lichtempfindlichen Elemente (4) vorgesehen ist.

8. Sensor nach einem der Ansprüche 6 oder 7, **dadurch gekennzeichnet, dass** der erstgenannte Wellenleiter (1) oder der zweite Wellenleiter (7) mit einem Phasenschieber (10) ausgestattet ist.

9. Sensor nach einem der Ansprüche 1 bis 8, **dadurch gekennzeichnet, dass** er mindestens einen weiteren optisch mit einem lichtempfindlichen Element gekoppelten Wellenleiter (1') sowie mehrere optisch mit dem weiteren Wellenleiter (1') gekoppelte und jeweils mit einer Einrichtung (5) zum Verstellen von Resonanzfrequenzen ausgestattete weitere Ringresonatoren (2) aufweist, wobei auch mindestens zwei der weiteren Ringresonatoren (2) in einem Grundzustand unterschiedliche optische Längen haben und eingerichtet sind zum Beeinflussen ihrer Resonanzfrequenzen durch verschiedene, für jeden dieser Ringresonatoren (2) jeweils spezifische Messgrößen.

10. Verfahren zum Detektieren von Molekülen mindestens eines Stoffes mittels eines optischen Sensors,
wobei der Sensor einen optischen Wellenleiter (1), in den Licht einspeisbar ist, und mindestens ein lichtempfindliches Element (4) zum Delektieren von aus dem Wellenleiter (1) ausgekoppeltem Licht sowie mehrere Ringresonatoren (2) aufweist, wobei die Ringresonatoren (2) optisch mit dem genannten Wellenleiter (1) gekoppelt sind und mit Ausnahme höchstens eines der Ringresonatoren (2) jeweils eine Einrichtung (5) zum Verstellen von Resonanzfrequenzen des jeweiligen Ringresonators (2) und/oder einer Kopplung zwischen dem Ringresonator (2) und dem Wellenleiter (1) aufweisen und wobei mindestens zwei der Ringresonatoren (2) in einem Grundzustand unterschiedliche optische Längen haben und eingerichtet sind zum Beeinflussen ihrer Resonanzfrequenzen durch verschiedene, für jeden dieser Ringresonatoren (2) jeweils spezifische Messgrößen, wobei bei dem Verfahren Licht in den Wellenleiter (1) eingespeist, ein zu untersuchendes Fluid mit mindestens zwei der Ringresonatoren (2) des Sensors in Kontakt gebracht und ein Ausgangssignal des lichtempfindlichen Elements (4) wellenlängenabhängig ausgewertet wird, wobei eine durch das Fluid verursachte Verschiebung von Resonanzen im Ausgangssignal detektiert wird und der Ringresonator (2), auf den diese Verschiebung zurückzuführen ist, identifiziert wird, indem die Resonanzfrequenzen der Ringresonatoren (2) und/oder deren Kopplung an den Wellenleiter (1) mit unterschiedlichen, für jeweils einen der Ringresonatoren (2) spezifischen Zeitabhängigkeiten variiert werden und ermittelt wird, mit welcher dieser Zeitabhängigkeiten zeitlich korreliert sich die verschobenen Resonanzen verändern.

11. Verfahren nach Anspruch 10, **dadurch gekennzeichnet, dass** die den verschiedenen Ringresonatoren (2) zugeordneten Einrichtungen (5) zum Verstellen der Resonanzfrequenzen und/oder der Kopplung zwischen Ringresonator (5) und Wellenleiter (1) nacheinander oder periodisch mit unterschiedlichen Frequenzen angesteuert werden.

12. Verfahren nach einem der Ansprüche 10 oder 11, **dadurch gekennzeichnet, dass** das Ausgangssignal wellenlängenabhängig ausgewertet wird, indem das in den Wellenleiter (1) eingespeiste Licht über einen Wellenlängenbereich durchgestimmt wird, der mindestens jeweils eine Resonanzwellenlänge jedes der Ringresonatoren (2) umfasst.

13. Verfahren nach einem der Ansprüche 10 bis 12,
**dadurch gekennzeichnet, dass** Licht zweier unterschiedlicher Polarisationen in den Wellenleiter (1) eingespeist wird und das Ausgangssignal für jede dieser Polarisationen unabhängig ausgewertet wird.

14. Verwendung eines Sensors nach einem der Ansprüche 1 bis 9 zur Durchführung eines Verfahrens nach einem der Ansprüche 10 bis 13.

## Claims

1. An optical sensor which has an optical waveguide (1) into which light can be fed, and at least one light-sensitive element (4) for detecting light which is coupled out of the waveguide (1), and also a plurality of ring resonators (2), the ring resonators (2) being coupled optically with the aforementioned waveguide (1) and, with the exception of at most one of the ring resonators (2), in each case having a means (5) for adjusting resonant frequencies of the respective ring resonator (2) and/or a coupling between the ring resonator (2) and the waveguide (1), these means (5) being set up to vary an effective refractive index of the respective ring resonator (2),
**characterised in that**
at least two of the ring resonators (2) in a basic state have different optical lengths and are set up to influence their resonant frequencies by different measured variables which are specific in each case to each of these ring resonators (2), the sensor having at least one control unit (6) for the means (5) for adjusting the resonant frequencies of the ring resonators (2), which unit is set up for modulating of the effective refractive indices of the ring resonators (2) with different time dependencies which are specific in each case to each of these ring resonators (2).

2. A sensor according to Claim 1, **characterised in that** the at least two ring resonators (2) in each case have a sensitive region which is provided with a different active layer for each of these ring resonators (2) for the selective accretion of one or more substances which are to be detected.

3. A sensor according to one of Claims 1 or 2, **characterised in that** at least one reference resonator with resonant frequencies which are independent of the measured variables is located beneath the ring resonators (2).

4. A sensor according to one of Claims 1 to 3, **characterised in that** it has a light source (3) of tunable wavelength for coupling light into the waveguide (1).

5. A sensor according to one of Claims 1 to 4, **characterised in that** the means (5) for adjusting the resonant frequencies of the ring resonators (5) have in each case a heating element or electrical contacts for applying an electric field to the respective ring resonator (2).

6. A sensor according to one of Claims 1 to 5, **characterised in that** it has at least a second waveguide (7) which together with the first-mentioned waveguide (1) forms a Mach-Zehnder interferometer.

7. A sensor according to Claim 6, **characterised in that** both the first-mentioned waveguide (1) and the second waveguide (7) are optically coupled with in each case one light-sensitive element (4), and a differential amplifier (9) for evaluating output signals of these light-sensitive elements (4) is provided.

8. A sensor according to one of Claims 6 or 7, **characterised in that** the first-mentioned waveguide (1) or the second waveguide (7) is equipped with a phase shifter (10).

9. A sensor according to one of Claims 1 to 8, **characterised in that** it has at least one further waveguide (1') which is optically coupled with a light-sensitive element and also a plurality of further ring resonators (2) which are optically coupled with the further waveguide (1') and in each case equipped with a means (5) for adjusting resonant frequencies, with also at least two of the further ring resonators (2) in a basic state having different optical lengths and being set up to influence their resonant frequencies by different measured variables which are specific in each case for each of these ring resonators (2).

10. A method for detecting molecules of at least one substance by means of an optical sensor,
the sensor having an optical waveguide (1) into which light can be fed, and at least one light-sensitive element (4) for detecting light which is coupled out of the waveguide (1), and also a plurality of ring resonators (2), the ring resonators (2) being coupled optically with the aforementioned waveguide (1) and, with the exception of at most one of the ring resonators (2), in each case having a means (5) for adjusting resonant frequencies of the respective ring resonator (2) and/or a coupling between the ring resonator (2) and the waveguide (1), and at least two of the ring resonators (2) in a basic state having different optical lengths and being arranged to influence their resonant frequencies by different measured variables which are specific in each case to each of these ring resonators (2), wherein, in the method, light is fed into the waveguide (1), a fluid which is to be investigated is brought into contact with at least two of the ring resonators (2) of the sensor and an output signal of the light-sensitive element (4) is evaluated in wavelength-dependent manner, with a shift of resonances caused by the fluid being detected in the output signal and the ring resonator (2) to which this shift is to be ascribed being identified in that the resonant frequencies of the ring resonators (2) and/or the coupling thereof to the waveguide (1) are varied with different time dependencies which are specific for one of the ring resonators (2) in each case, and it is determined with which of these time dependencies the shifted resonances change in time-correlated manner.

11. A method according to Claim 10, **characterised in that** the means (5) associated with the different ring resonators (2) for adjusting the resonant frequencies and/or the coupling between the ring resonator (5) and waveguide (1) are actuated in succession or periodically with different frequencies.

12. A method according to one of Claims 10 or 11, **characterised in that** the output signal is evaluated in wavelength-dependent manner by tuning the light which is fed into the waveguide (1) over a wavelength range which comprises at least in each case a resonance wavelength of each of the ring resonators (2).

13. A method according to one of Claims 10 to 12, **characterised in that** light of two different polarisations is fed into the waveguide (1) and the output signal for each of these polarisations is evaluated independently.

14. Use of a sensor according to one of Claims 1 to 9 for carrying out a method according to one of Claims 10 to 13.

## Revendications

1. Capteur optique, qui présente un guide d'ondes optique (1) dans lequel on peut injecter de la lumière, au moins un élément sensible à la lumière (4) permettant de détecter la lumière extraite du guide d'ondes (1), ainsi que plusieurs résonateurs en anneau (2) ; où les résonateurs en anneau (2) sont couplés optiquement au guide d'ondes évoqué (1) et disposent chacun, à l'exception d'un des résonateurs en anneau (2) tout au plus, d'un dispositif (5) permettant de régler la fréquence de résonance du résonateur en anneau (2) concerné, et / ou d'un couplage entre le résonateur en anneau (2) et le guide d'ondes (1), où ces dispositifs sont configurés de telle façon qu'ils permettent de faire varier l'indice de réfraction effective du résonateur en anneau (2) concerné, **caractérisé en ce que**
au moins deux des résonateurs en anneau (2) ont dans un mode fondamental des chemins optiques différents et sont configurés de façon à voir modifiées leurs fréquences de résonance par des valeurs à mesurer différentes, spécifiques à chaque fois à chacun de ces résonateurs en anneau (2), où le capteur présente au moins une unité de commande (6) pour les dispositifs (5) destinés à régler les fréquences de résonance des différents résonateurs en anneau (2), unité de commande (6) qui sert à moduler l'indice de réfraction effective des résonateurs en anneau (2) avec des dépendances temporelles spécifiques à chaque fois pour chacun de ces résonateurs en anneau (2).

2. Capteur selon la revendication 1, **caractérisé en ce que** les résonateurs en anneau (2) au nombre d'au moins deux présentent pour chacun d'entre eux un domaine de détection qui est doté d'une couche active différente pour chacun de ces résonateurs en anneau (2), destinée à fixer de façon sélective une ou plusieurs substances à détecter.

3. Capteur selon l'une des revendications 1 ou 2 **caractérisé en ce que** se trouve parmi les résonateurs en anneau (2) au moins un résonateur de référence avec une fréquence de résonance indépendante des valeurs à mesurer.

4. Capteur selon l'une des revendications 1 à 3 **caractérisé en ce qu'**il comprend une source de lumière (3) de longueur d'onde réglable en vue d'injecter de la lumière dans le guide d'ondes (1).

5. Capteur selon l'une des revendications 1 à 4 **caractérisé en ce que** les dispositifs (5) destinés à régler les fréquences de résonances des différents résonateurs en anneau (2) présentent pour chacun un élément chauffant ou bien des contacts électriques en vue d'appliquer un champ électrique au résonateur en anneau (2) correspondant.

6. Capteur selon l'une des revendications 1 à 5 **caractérisé en ce qu'**il comprend au moins un deuxième guide d'ondes (7), qui constitue avec le premier guide d'ondes (1) un interféromètre de Mach-Zehnder.

7. Capteur selon la revendication 6 **caractérisé en ce que** aussi bien le premier guide d'ondes cité (1) que le second guide d'ondes (7) sont couplés optiquement avec pour chacun un élément sensible à la lumière (4), et qu'est prévu également un amplificateur différentiel (9) en vue d'évaluer les signaux de sortie de ces éléments sensibles à la lumière (4).

8. Capteur selon l'une des revendications 6 ou 7 **caractérisé en ce que** le premier guide d'ondes (1) cité ou bien le second guide d'ondes (7) est pourvu d'un déphaseur (10).

9. Capteur selon l'une des revendications 1 à 8 **caractérisé en ce qu'**il comprend au moins un autre guide d'ondes (1') couplé optiquement avec un élément sensible à la lumière ainsi que plusieurs autres résonateurs en anneau (2) équipés à chaque fois d'un dispositif (5) destiné à régler les fréquences de résonances et couplés optiquement avec le guide d'ondes de plus (1'), où également au moins deux des résonateurs en anneau en plus (2) ont dans un mode fondamental des chemins optiques différents et sont configurés de façon à voir modifiées leurs fréquences de résonance par des valeurs à mesurer différentes, spécifiques à chaque fois à chacun de ces résonateurs en anneau (2).

10. Procédé de détection de molécules d'au moins une substance au moyen d'un capteur optique,
où le capteur présente un guide d'ondes optique (1) dans lequel on peut injecter de la lumière, au moins un élément sensible à la lumière (4) permettant de détecter la lumière extraite du guide d'ondes (1), ainsi que plusieurs résonateurs en anneau (2) ; où les résonateurs en anneau (2) sont couplés optiquement au guide d'ondes évoqué (1) et disposent chacun, à l'exception d'un des résonateurs en anneau (2) tout au plus, d'un dispositif (5) permettant de régler la fréquence de résonance du résonateur en anneau (2) concerné et / ou un couplage entre le résonateur en anneau (2) et le guide d'ondes (1), et où au moins deux des résonateurs en anneau (2) ont dans un mode fondamental des chemins optiques différents et sont configurés de façon à voir modifiées leurs fréquences de résonance par des valeurs à mesurer différentes, spécifiques à chaque fois à chacun de ces résonateurs en anneau (2),
où au cours du procédé de détection on injecte de la lumière dans le guide d'ondes (1), on fait entrer en contact le fluide à examiner avec au moins deux des résonateurs en anneau (2) du capteur et on évalue le signal de sortie de l'élément sensible à la lumière (4) en fonction de sa longueur d'onde, où l'on détecte dans le signal de sortie un décalage de résonances provoquée par le fluide et où l'on identifie le résonateur en anneau (2) responsable de ce décalage en faisant varier les fréquences de résonance des résonateurs en anneau (2) et/ou de leur couplage au guide d'ondes (1) avec des dépendances temporelles différentes, spécifiques à chaque fois à l'un des résonateurs en anneau (2), et où l'on détermine avec laquelle de ces dépendances temporelles les résonances décalées se modifient selon une corrélation temporelle.

11. Procédé selon la revendication 10, **caractérisé en ce que** les dispositifs (5) permettant de régler la fréquence de résonance), affectés aux différents résonateurs en anneau (2), et / ou le couplage entre le résonateur en anneau (2) et le guide d'ondes (1), sont réglés sur des fréquences différentes l'un après l'autre ou bien de façon périodique.

12. Procédé selon l'une des revendications 10 ou 11, **caractérisé en ce que** le signal de sortie est évalué de façon dépendante de la longueur d'onde, dans la mesure où l'on fait varier la lumière injectée dans le guide d'ondes (1) dans un domaine de longueurs d'onde qui inclut pour chacun des résonateurs en anneau (2) au moins une de ses longueur d'onde de résonance.

13. Procédé selon l'une des revendications 10 à 12, **caractérisé en ce que** de la lumière à deux polarisations différentes est injectée dans le guide d'ondes (1) et que le signal de sortie est évalué de façon indépendante pour chacune de ces deux polarisations.

14. Utilisation d'un capteur selon l'une des revendications 1 à 9 en vue de la mise en oeuvre d'un procédé selon l'une des revendications 10 à 13.
